# FASCICULE DE BREVET EUROPEEN

(11) **EP 2 934 989 B1**
(45) Date de publication et mention de la délivrance du brevet: **04.01.2017**
(21) Numéro de dépôt: 13808079.1
(22) Date de dépôt: 19.11.2013
(51) Int. Cl.: B62D 25/04, B62D 25/08, B62D 25/12

(54) **STRUCTURE LATERALE ARRIERE DE VEHICULE DEFORMABLE**
VERFORMBARE SEITLICHE HINTERE FAHRZEUGSTRUKTUR
DEFORMABLE LATERAL REAR VEHICLE STRUCTURE

(30) Priorité: 21.12.2012 FR 1262660
(43) Date de publication de la demande: 28.10.2015
(73) Titulaire: PEUGEOT CITROËN AUTOMOBILES SA, 78140 Vélizy Villacoublay (FR)
(72) Inventeur: BENANE, Said, 94550 Chevilly Larue (FR)
(86) Numéro de dépôt international: PCT/FR2013/052791
(87) Numéro de publication internationale: WO 2014/096590

(56) Documents cités:
- FR-A1- 2 917 048
- JP-A- H1 143 014
- JP-A- 2009 023 367

## Description

L'invention concerne une structure de la partie latérale arrière d'un véhicule, sur laquelle est fixée du côté intérieur du véhicule un support pour des systèmes de retenue comme par exemple un système de verrouillage de dossier de siège ou un enrouleur de ceinture de sécurité.

Lors d'un choc avant, les passagers arrière d'un véhicule sont retenus par les ceintures de sécurité avec enrouleurs tandis que les charges placées dans le coffre sont arrêtées par le dossier de la banquette arrière. De manière classique, les enrouleurs de ceinture de sécurité des passagers arrières sont fixés sur un élément de la structure latérale du même côté que le passager retenu, tandis que le dossier de siège, en particulier lorsqu'il est rabattable, est verrouillé dans sa partie haute, de chaque côté, par des moyens de verrouillage fixés eux aussi sur des éléments de la structure intérieure latérale arrière du véhicule. Lorsque le véhicule comporte une ouverture pour réaliser par exemple une vitre de custode au-dessus des zones de fixation de l'enrouleur de ceinture et des moyens de verrouillage du dossier de la banquette, on prévoit une structure latérale en dessous de cette ouverture, suffisamment résistante pour pouvoir, en cas de choc avant du véhicule, résister aux efforts de retenue importants dirigés vers l'avant du véhicule et issus des moyens de verrouillage du dossier de la banquette et des enrouleurs de ceinture.

Par exemple, il est connu au travers du document JP2009023367, de concevoir une structure de véhicule comportant une structure rigide approximativement verticale, sous la forme d'un pilier en embouti de tôle positionné dans le coffre, juste derrière le siège arrière, et fixé à l'intérieur du véhicule sur la face intérieure du passage de roue, remontant sur la partie intérieure du côté latéral du véhicule. Des moyens de verrouillage d'un dossier de banquette rabattable ainsi qu'un enrouleur de ceinture de sécurité sont positionnés en haut de cette structure.

Mais pour être résistante face aux efforts de retenue en cas de choc avant, une telle conception nécessite de rajouter des éléments de structure volumineux dans la zone de coffre. Une telle structure diminue par conséquent le volume du coffre et en complexifie la forme. Le document FR2917048 divulgue aussi une structure latérale de véhicule conforme aux caractéristiques du préambule de la revendication 1.

La présente invention propose une structure latérale arrière d'un véhicule dont la conception particulière permet de fixer des éléments de retenue, comme le système de verrouillage de siège ou l'enrouleur ceinture de sécurité, de manière sûre tout en éliminant les structures imposantes dans le volume de coffre.

Conformément à cet objectif, il est proposé une structure latérale arrière pour un véhicule comportant au moins une porte latérale d'accès à l'habitacle sur au moins le même côté latéral que cette structure latérale arrière, positionnée entre la porte latérale la plus en arrière par rapport au sens du véhicule, et la face arrière du véhicule, comportant au moins une traverse latérale sur laquelle est fixée au moins un support destiné à recevoir des moyens de retenue des passagers ou d'autres objets contenus dans le véhicule, ladite traverse latérale s'étendant entre le pied arrière de l'ouverture de la porte et la face arrière du véhicule. Ledit pied arrière est un élément de structure du véhicule participant à l'encadrement de l'ouverture de la porte, s'étendant entre un longeron latéral du véhicule et une arche latérale du pavillon du véhicule, et positionné à l'arrière de l'ouverture de porte en prenant comme référence le sens du véhicule. Si le véhicule comporte plusieurs portes latérales, la porte à considérer sera la porte latérale la plus en arrière. A l'inverse, si le véhicule ne comporte qu'une seule porte latérale de chaque côté, c'est cette unique porte latérale qui sera à considérer.

La traverse latérale peut être réalisée par un embouti de tôle ou un profilé, formant un corps creux de section ouverte comme par exemple une forme en U. Elle peut aussi être réalisée par un embouti de tôle ou un profilé de section fermée obtenu, soit par l'association d'une pièce de section ouverte ,telle que définie précédemment, avec d'autres éléments de la carrosserie du véhicule, comme par exemple la peau du véhicule, un autre élément de la structure latérale arrière ou une pièce rapportée, soit par un profilé formant un corps creux de section fermée sur lui-même comme par exemple un tube. L'association du profilé ouvert avec un élément de la structure du véhicule permettra par exemple de renforcer une structure existante.

Les moyens de retenue sont les différents systèmes utilisés pour retenir de manière non limitative les passagers, les composants mobiles ou non de l'habitacle du véhicule comme par exemple le dossier de siège rabattable, ou encore les moyens pour fixer les objets embarqués par l'utilisateur du véhicule tel qu'un filet de maintien de bagage. Ces moyens de retenue sont par exemple et de manière non limitative une ceinture de sécurité et son enrouleur qui retiennent les passagers, un moyen de verrouillage d'un dossier de siège en position relevée, ou encore des crochets de fixation d'un filet de retenue des bagages. Ces moyens de retenue sont fixés à la structure du véhicule par l'intermédiaire d'au moins un support, qui peut être spécifique à chacun d'eux ou commun à plusieurs de ces moyens de retenue. Ainsi, de manière avantageuse, en cas de choc, les efforts de retenue issus des moyens de retenue sont transmis vers le pied arrière via la traverse latérale située dans la structure latérale. La fixation des moyens de retenus ne génère pas d'impact important dans le volume utile de l'habitacle puisque la traverse latérale est placée dans la structure latérale arrière du véhicule.

Dans un mode de réalisation préférée de l'invention, le support reçoit à la fois l'enrouleur de ceinture de sécurité et le moyen de verrouillage du dossier du siège. Le support sera de préférence positionné en arrière du dossier du siège, en prenant comme repère le sens du véhicule. Le moyen de verrouillage peut être par exemple une gâche métallique sur laquelle un verrou positionné sur le dossier de la banquette vient se crocheter. Un des intérêts d'utiliser un support est de permettre un positionnement adéquat du moyen de retenue par rapport à la chose à retenir.

Selon un mode de réalisation préféré de l'invention, la traverse latérale est positionnée de manière à ce que sa direction principale soit sensiblement parallèle à l'axe longitudinal du véhicule, avec une forme pouvant s'adapter à la forme du côté latéral du véhicule. Elle pourra être, dans un autre mode de réalisation, située sensiblement à la même hauteur que le haut du dossier de siège suivant l'axe vertical du véhicule. Cette situation permet d'être proche de la position du verrou du dossier de siège qui est placé en partie haute du dossier, et de positionner l'enrouleur de ceinture de sécurité à une hauteur proche de celle de l'épaule du passager. Ainsi, en cas de choc, les efforts de retenue issus de la ceinture de sécurité et/ou du moyen de verrouillage de dossier seront orientés vers l'avant du véhicule et suivant une direction sensiblement parallèle à l'axe longitudinal du véhicule. Par cette configuration, la distance entre le moyen de retenu et les points de fixation du support sur la traverse, notamment celle projetée sur l'axe vertical du véhicule, sera avantageusement petite. Le bras de levier créé par la distance entre les points de fixation du support sur la traverse, et les points d'application d'un effort de retenue par les moyens de retenue sur le support est réduit. Par conséquent, le couple de rotation qui agit sur le support et qui a pour origine ce bras de levier, est réduit. Le support transmettra moins de couple de rotation sur la traverse par ces points de fixation. Les efforts transmis seront essentiellement suivant la direction longitudinale du véhicule.

Dans un mode de réalisation de l'invention, la traverse latérale est positionnée juste en dessous d'une ouverture réalisée dans la partie latérale arrière du véhicule et qui est destinée à recevoir une vitre de custode. Dans ce cas, la traverse latérale peut comporter des moyens de fixation de la vitre de custode qui vient fermer l'ouverture de custode, comme par exemple des surfaces destinées à recevoir des cordons de colle, ou des surfaces destinées à recevoir des joints d'étanchéité propres à coopérer avec la vitre de custode. La forme de la traverse peut se conformer à la forme de la vitre de custode.

Dans un mode de réalisation préféré de l'invention, la traverse latérale comporte une zone de faiblesse située entre l'extrémité avant de la traverse latérale suivant le sens du véhicule, et le support, sur la partie latérale de cette traverse qui est orientée du côté de l'intérieur du véhicule, et dont la résistance mécanique devant un effort de compression suivant un axe sensiblement parallèle à l'axe de la traverse latérale, est strictement inférieure à la résistance, suivant le même effort, du reste de la traverse latérale, de sorte que, sous l'action d'un effort de compression suivant un axe sensiblement parallèle à l'axe longitudinal de la traverse latérale, cette traverse se déforme au niveau de cette zone de faiblesse et suivant une direction sensiblement parallèle à l'axe transversal du véhicule et dirigée vers l'extérieur du véhicule. Ainsi, une partie de l'énergie transitant par la traverse latérale lors de la retenue des passagers et du dossier au moment d'un choc avant, est dissipée dans la déformation de la traverse latérale. Les efforts transmis sur le pied arrière de l'ouverture de porte sont par conséquents diminués par rapport à une conception de traverse latérale ne comportant pas cette zone dite de faiblesse, ce qui permet avantageusement de limiter les risques de déformation de ce pied arrière. Le fait d'imposer cette cinématique de pliage de la traverse latérale dans laquelle la zone de faiblesse se déplace vers l'extérieur du véhicule tandis que les deux extrémités de la traverse latérale se rapprochent l'une de l'autre dans le sens longitudinal par rapport au sens du véhicule, permet de s'assurer que lors d'un choc, la traverse latérale, en se déformant, ne vienne pas en contact avec le passager. Un autre des avantages de ce mode de réalisation vient du fait que le pliage de la traverse latérale est peu sensible aux variations de direction de l'effort de compression par rapport à l'axe longitudinal de la traverse latérale. L'absorption d'énergie par la traverse latérale est rendu plus fiable.

Dans un mode de réalisation préféré de l'invention, la réduction de la résistance dans la zone de faiblesse est réalisée par une forme en creux ménagée sur la partie de la traverse latérale orientée du côté de l'intérieur du véhicule, le creux étant orienté vers l'extérieur du véhicule. D'autres solutions pour affaiblir la résistance de la zone peuvent être envisagées, comme par exemple la réalisation de trous, de pliures ou de zones frangibles au niveau de la zone de faiblesse. Toutes ces solutions ont pour effet de diminuer l'inertie de la traverse latérale sur son côté orienté vers l'intérieur du véhicule et face à l'effort de compression suivant l'axe longitudinal de la traverse, vis-à-vis du reste de la traverse.

De préférence, la zone de faiblesse est choisie positionnée sensiblement au milieu du segment de la traverse latérale définie entre le pied arrière de l'ouverture de porte et le support. D'autres positionnements le long de la traverse latérale, sont aussi envisageables. On comprendra aisément que plus la zone de faiblesse est proche du pied arrière ou du support, plus la capacité de pliage sera dégradée.

Dans un mode de réalisation de l'invention, la traverse latérale est constituée de deux demi-traverses, fixées l'une à l'autre à une de leurs extrémités respectives, au niveau de la zone affaiblie. L'une des demi-traverses recouvre de manière préférentielle l'extrémité de la deuxième demi-traverse sur la longueur de la zone de faiblesse. Ainsi, la zone de faiblesse permet d'initier le pliage de la traverse latérale lorsque celle-ci est soumise à un effort de compression sensiblement parallèle à son axe longitudinal, tandis que le recouvrement d'une des demi-traverses sur l'autre demi-traverse permet d'assurer une rigidité de la traverse latérale pendant le pliage au niveau de la zone de faiblesse, une fois le pliage initié, de manière à augmenter sa capacité de dissipation d'énergie. Ainsi, de manière avantageuse, la traverse permet à la fois une dissipation importante d'énergie lors de sa déformation tout en conservant une résistance mécanique suffisante pour éviter de s'effondrer et de se plier totalement devant l'effort de compression, transmis par le support. En effet, s'il y avait un pliage total de la traverse, le support se déplacerait vers l'avant du véhicule de manière importante, entraînant avec lui les moyens de retenus, et générant un risque important de diminuer la sécurité du passager.

D'autres solutions pour renforcer la zone affaiblie une fois le pliage initié, sont possibles, que la traverse soit réalisée en plusieurs parties ou non, comme par exemple des variations d'épaisseur de la traverse ou l'ajout de renfort sur la traverse ou à l'intérieur de celle-ci, au niveau de la zone de faiblesse.

La présente invention a aussi pour objet un véhicule automobile comportant des arches rigides de pavillon, dépourvu de traverse de pavillon à l'extrémité arrière du pavillon suivant le sens du véhicule, et comportant une structure latérale arrière suivant la présente l'invention. C'est par exemple le cas d'un véhicule découvrable comportant un toit souple se repliant en translatant longitudinalement par rapport au véhicule le long des arches rigides de pavillon. Une application sur un tel véhicule est d'autant plus intéressante que la structure supérieure de ce type de véhicule, correspondant à la partie de la structure du véhicule située au-dessus de la ligne de caisse définie par la ligne passant au niveau du bas des vitres latérales du véhicule, est moins résistante du fait de la suppression de la traverse arrière de pavillon. Les efforts qui ne peuvent plus passer par cette structure supérieure seront avantageusement repris par la traverse latérale de la structure latérale arrière proposée par la présente invention sans nécessairement transmettre des efforts importants sur le pied arrière en cas de choc avant.

Une application de cette invention peut être envisagée aussi sur un véhicule cabriolet dépourvu totalement d'arche de pavillon. Dans ce cas présent, le pied arrière de l'ouverture de porte s'étend entre le longeron latéral et le haut de la ceinture de caisse du véhicule.

D'autres particularités et avantages de l'invention apparaitront encore tout au long de la description ci-après faite en référence aux figures dans lesquelles :
- la fig. 1 représente une vue de la face intérieure de la structure latérale arrière d'un véhicule ne comportant qu'une porte latérale sur chacun de ces côtés
- la fig. 2 représente une vue en élévation arrière du dessus de la structure latérale arrière de la figure 1.
- la fig. 3 est une vue identique à celle de la fig. 2, mais après un choc avant, montrant la déformation de la traverse latérale sous l'action des efforts de retenue dirigés vers l'avant du véhicule et issus des moyens de retenue.
- la fig. 4 représente une vue en éclaté d'un mode de réalisation de la traverse
- la fig. 5 représente une vue de la structure latérale arrière vue depuis l'intérieur du véhicule, représentant un mode de réalisation de l'invention pour un véhicule spécifique, dans laquelle la forme de la traverse s'adapte aux formes du flan latéral et de l'ouverture destinée à recevoir la vitre de custode.

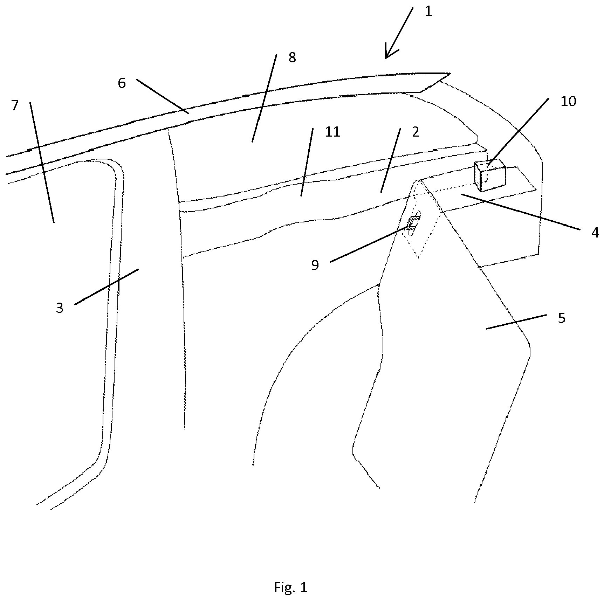

Suivant un mode de réalisation préférentiel de l'invention, la figure 1 montre une vue de la face intérieure de la structure latérale arrière 1 d'un véhicule comportant une porte sur un de ces côtés. Conformément à l'invention, la structure latérale arrière 1 comporte une traverse latérale 2 sur laquelle est fixé un support 4. La traverse latérale 2 s'étend entre le pied arrière 3 d'ouverture de porte 7 et la face arrière du véhicule. Une arche de pavillon 6 relie la face arrière du véhicule à un montant avant de pare-brise classiquement positionné sur le côté du pare-brise. Le pied arrière 3 s'étend en arrière de l'entrée de porte 7, entre le longeron latéral (non représenté) et l'arche de pavillon 6. Le support 4 est fixé sur la partie arrière de la traverse latérale 2 par rapport au sens du véhicule, par des points de soudage ou tous autres moyens de fixation connus par l'homme du métier. Le support 4 peut être aussi constitué d'une forme intégrée dans la traverse latérale 2. Ce support 4 porte un enrouleur de ceinture de sécurité 10 et un moyen de verrouillage 9 d'un dossier 5, représenté ici sous la forme d'une gâche. Seule la plaque arrière de la structure du dossier 5 est représentée dans la figure 1 pour une meilleure compréhension de l'implantation des différents éléments.

Une ouverture de custode 8 est réalisée juste au-dessus de la traverse latérale 2, destinée à recevoir une vitre de custode. La traverse latérale 2 comporte une zone de faiblesse 11 conçue dans cet exemple de réalisation par un renfoncement dans la traverse latérale 2 sur la partie de la traverse 2 orientée du côté de l'intérieur du véhicule. Cette zone dite de faiblesse est positionnée approximativement à équidistance de la jonction de la traverse latérale 2 sur le pied arrière 3 et du point d'ancrage avant du support 4 sur la traverse latérale 2 par rapport au sens du véhicule.

Le renfoncement dans la zone de faiblesse diminue la résistance de partie de la traverse latérale 2 côté intérieur du véhicule, devant un effort de compression suivant l'axe longitudinal de la traverse latérale 2. Si la traverse latérale 2 est soumise à un effort de compression suivant son axe longitudinal, la partie de la traverse latérale 2 du côté intérieur du véhicule résistera moins que le reste de la traverse latérale 2, ce qui va générer le pliage au niveau de la zone de faiblesse 11 de la traverse 2.

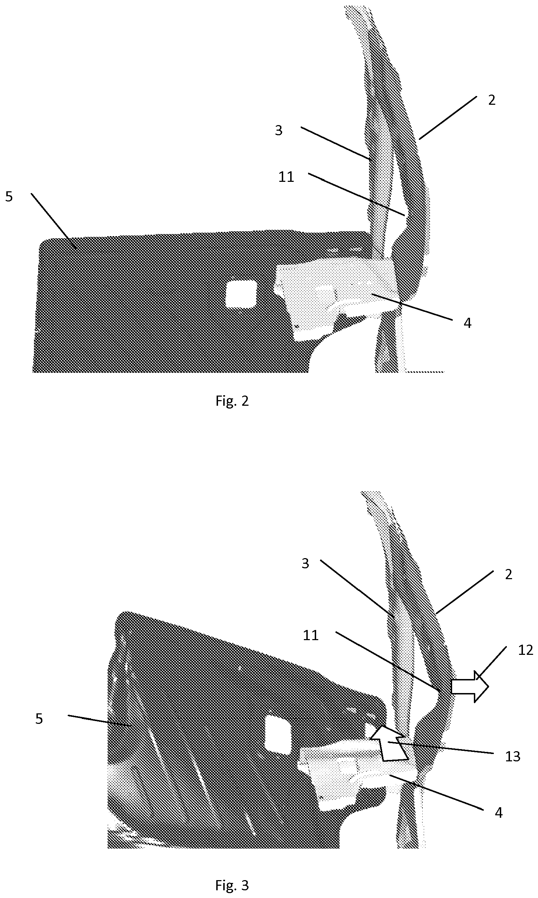

Les fig. 2 et 3 montrent respectivement, suivant une vue en élévation arrière depuis le dessus de la structure latérale arrière du véhicule, la forme de la traverse latérale 2, avant et après un choc avant du véhicule. La flèche 12 indique le sens de déplacement de la zone de faiblesse 11 vers l'extérieur du véhicule, sensiblement parallèle à un axe transversal au véhicule, tandis que la flèche 13 montre le déplacement du support 4 sensiblement parallèlement à l'axe longitudinal du véhicule. Ce déplacement suivant la flèche 13 du support 4 génère les efforts de compression sur la traverse 2 à l'origine de la déformation de celle-ci.

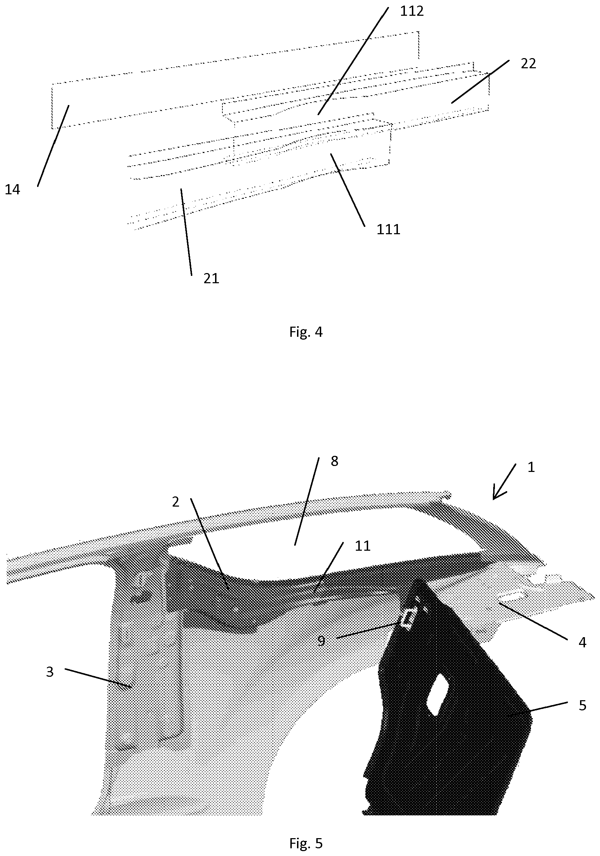

La fig. 4 montre une vue en éclaté de la traverse latérale 2 au niveau de la zone de faiblesse 11 suivant un mode de réalisation de la traverse latérale 2 dans laquelle la traverse latérale 2 est réalisée à partir de deux profilés 21 et 22 se rejoignant au niveau de la zone de faiblesse 11. Chaque profilé 21 et 22 est réalisé par une tôle emboutie et comporte respectivement un renfoncement 111 et 112 à leur extrémité. Les profilés se superposent au niveau de ces renfoncements 111 et 112. Pour cela, la section d'un des profilés est légèrement plus grande que la section de l'autre profilé au niveau de leur zone de recouvrement, et leurs formes sont similaires de manière à permettre leur emboîtement. Ils sont fixés entre eux par des moyens connus de l'homme du métier, comme par exemple des points de soudure ou un collage. Une plaque 14 est placée du côté de la traverse latérale 2 orienté vers l'extérieur du véhicule pour fermer le corps creux de la traverse latérale 2 ainsi constituée et en augmenter la résistance. Des bords tombés 21a et 22a de part et d'autre des profilés 21 et 22 créent des zones pour permettre une fixation par points de soudage entre les profilés 21 et 22, et la plaque 14. La plaque 14 peut être une plaque spécifique dédiée à la fermeture des profilés 21 et 22, ou une partie d'une surface utilisée pour un autre élément de la carrosserie comme par exemple la peau extérieure du véhicule ou un autre élément de la structure latérale arrière du véhicule.

Le recouvrement des deux profilés 21 et 22 couvre la totalité de la zone de faiblesse 11. Ce recouvrement au niveau de la zone de faiblesse 11 permet de renforcer la résistance au pliage de la traverse 2 une fois que le pliage a été initié.

Ainsi, tandis que le renfoncement dans la zone de faiblesse 11 permet de générer le pliage de la traverse 2 lorsque la traverse 2 est soumise à un effort en compression suivant son axe longitudinal, l'effort nécessaire pour continuer à plier la traverse 2 reste important, ce qui a pour effet de dissiper ainsi une plus grande quantité d'énergie. Il pourra être envisagé bien sûr un recouvrement partiel de la zone 11 par au moins l'un des deux profilés 21 et 22.

## Revendications

1. Structure latérale arrière d'un véhicule comportant au moins une porte latérale d'accès à l'habitacle sur le même côté latéral que ladite structure **caractérisée en ce qu'**elle comporte au moins une traverse latérale (2) s'étendant entre un pied arrière (3) de l'ouverture de la porte (7) et la face arrière du véhicule, sur laquelle est fixée au moins un support (4) destiné à recevoir des moyens de retenue des passagers ou d'autres objets contenu dans le véhicule.

2. Structure latérale arrière d'un véhicule suivant la revendication 1 **caractérisée en ce que** les moyens de retenue fixés sur le support (4) sont au moins un système de verrouillage (9) d'un dossier de siège et/ou un enrouleur de ceinture de sécurité.

3. Structure latérale arrière d'un véhicule suivant l'une des revendications de 1 à 2 **caractérisée en ce que** la traverse latérale est positionnée sensiblement parallèle à l'axe longitudinal du véhicule.

4. Structure latérale arrière d'un véhicule suivant au moins l'une des revendications de 1 à 3 **caractérisée en ce que** la traverse latérale (2) est positionnée sous une ouverture (8) réalisée dans la partie latérale arrière du véhicule et destinée à recevoir une vitre de custode.

5. Structure latérale arrière d'un véhicule suivant au moins l'une des revendications 1 à 4 **caractérisée en ce que** la traverse latérale (2) comporte une zone de faiblesse (11) située entre l'extrémité avant de la traverse latérale (2), suivant le sens du véhicule, et le support (4), sur la partie latérale de cette traverse (2) orientée du côté de l'intérieur du véhicule, dont la résistance mécanique de cette zone de faiblesse (11) devant un effort de compression suivant un axe sensiblement parallèle à l'axe de la traverse latérale (2), est strictement inférieure à la résistance, suivant le même effort, du reste de la traverse latérale (2) de sorte que, sous l'action d'un effort de compression suivant un axe sensiblement parallèle à l'axe longitudinal de la traverse latérale, cette traverse latérale (2) se déforme au niveau de cette zone de faiblesse (11) suivant une direction sensiblement parallèle à l'axe transversal du véhicule et orientée vers l'extérieur du véhicule.

6. Structure latérale arrière d'un véhicule suivant la revendication 5 **caractérisée en ce que** la zone de faiblesse (11) est réalisée par une forme en creux, orientée vers l'extérieur du véhicule, dans la surface du côté de la traverse latérale (2) orientée du côté de l'intérieur du véhicule.

7. Structure latérale arrière d'un véhicule suivant l'une des revendications de 5 à 6 **caractérisée en ce que** la zone de faiblesse (11) est positionnée sensiblement au milieu du segment de la traverse latérale (2) définie entre le pied arrière (3) de l'ouverture de porte et le support (4).

8. Structure latérale arrière d'un véhicule suivant au moins l'une des revendications 5 ou 7 **caractérisée en ce que** la traverse latérale (2) est réalisée par deux profilés de tôle se recouvrant au moins sur la longueur de la zone de faiblesse (11).

9. Véhicule automobile comportant des arches rigides de pavillon (6), dépourvu de traverse de pavillon à l'extrémité arrière du pavillon suivant le sens du véhicule, **caractérisé en ce qu'**il comporte une structure latérale arrière suivant l'une des revendications de 1 à 8.

10. Véhicule cabriolet **caractérisé en ce qu'**il comporte une structure latérale arrière suivant au moins l'une des revendications de 1 à 8, exceptée la 4.

## Patentansprüche

1. Seitliche hintere Fahrzeugstruktur, die mindestens eine seitliche Zugangstür zu dem Innenraum auf derselben seitlichen Seite wie die Struktur umfasst, **dadurch gekennzeichnet, dass** sie mindestens einen seitlichen Querträger (2) umfasst, der sich zwischen einem hinteren Fuß (3) der Öffnung der Tür (7) und der Rückseite des Fahrzeugs erstreckt, auf dem mindestens ein Träger (4) befestigt ist, der dazu bestimmt ist, Rückhaltemittel der Insassen oder andere Objekte, die in dem Fahrzeug enthalten sind, aufzunehmen.

2. Seitliche hintere Struktur eines Fahrzeugs nach Anspruch 1, **dadurch gekennzeichnet, dass** die Rückhaltemittel, die auf dem Träger (4) befestigt sind, mindestens ein Verriegelungssystem (9) einer Sitzrückenlehne und/oder eines Sicherheitsgurtaufwicklers sind.

3. Seitliche hintere Struktur eines Fahrzeugs nach einem der Ansprüche 1 bis 2, **dadurch gekennzeichnet, dass** der seitliche Querträger im Wesentlichen parallel zu der Längsachse des Fahrzeugs positioniert ist.

4. Seitliche hintere Struktur eines Fahrzeugs nach mindestens einem der Ansprüche 1 bis 3, **dadurch gekennzeichnet, dass** der seitliche Querträger (2) unter einer Öffnung (8) positioniert ist, die in dem seitlichen hinteren Teil des Fahrzeugs hergestellt und dazu bestimmt ist, eine Scheibe über dem Hinterrad aufzunehmen.

5. Seitliche hintere Struktur eines Fahrzeugs nach mindestens einem der Ansprüche 1 bis 4, **dadurch gekennzeichnet, dass** der seitliche Querträger (2) eine Schwächezone (11) umfasst, die sich zwischen dem vorderen Ende des seitlichen Querträgers (2) entlang der Richtung des Fahrzeugs und dem Träger (4) auf dem seitlichen Teil dieses Querträgers (2), der zu der Innenseite des Fahrzeugs gerichtet ist, befindet, wobei die mechanische Festigkeit dieser Schwächezone (11) bei einer Kompressionskraft entlang einer Achse im Wesentlichen zu dem seitlichen Querträger (2) strikt kleiner ist als die Festigkeit gemäß derselben Kraft des Rests des seitlichen Querträgers (2), so dass sich dieser seitliche Querträger (2) unter der Einwirkung einer Kompressionskraft entlang einer Achse im Wesentlichen parallel zu der Längsachse des seitlichen Querträgers im Bereich dieser Schwächezone (11) entlang einer Richtung verformt, die im Wesentlichen zu der Querachse des Fahrzeugs parallel zur Außenseite des Fahrzeugs gerichtet ist.

6. Seitliche hintere Struktur eines Fahrzeugs nach Anspruch 5, **dadurch gekennzeichnet, dass** die Schwächezone (11) in einer Vertiefungsform, die zu der Außenseite des Fahrzeugs in der Oberfläche der Seite des seitlichen Querträgers (2) gerichtet ist, die zu der Innenseite des Fahrzeugs gerichtet ist, hergestellt ist.

7. Seitliche hintere Struktur eines Fahrzeugs nach einem der Ansprüche 5 bis 6, **dadurch gekennzeichnet, dass** die Schwächezone (11) im Wesentlichen in der Mitte des Segments des seitlichen Querträgers (2), die zwischen dem hinteren Fuß (3) der Türöffnung und dem Träger (4) definiert ist, positioniert ist.

8. Seitliche hintere Struktur eines Fahrzeugs nach mindestens einem der Ansprüche 5 oder 7, **dadurch gekennzeichnet, dass** der seitliche Querträger (2) aus zwei Blechprofilen hergestellt ist, die einander mindestens auf der Länge der Schwächezone (11) abdecken.

9. Kraftfahrzeug, das starre Dachbögen (6) umfasst, das keinen Dachquerträger an dem hinteren Ende des Daches entlang der Richtung des Fahrzeugs aufweist, **dadurch gekennzeichnet, dass** es eine seitliche hintere Struktur nach einem der Ansprüche 1 bis 8 umfasst.

10. Kabriolett, **dadurch gekennzeichnet, dass** es eine seitliche hintere Struktur nach mindestens einem der Ansprüche 1 bis 8, mit Ausnahme von Anspruch 4, umfasst.

## Claims

1. A lateral rear structure of a vehicle, comprising at least one lateral door for accessing the passenger compartment on the same lateral side as said structure, **characterized in that** it comprises at least one lateral crossmember (2) extending between a rear pillar (3) of the opening of the door (7) and the rear face of the vehicle, on which at least one support (4) is secured that is intended to receive means of retaining the passengers or other objects contained within the vehicle.

2. The lateral rear structure of a vehicle according to Claim 1, **characterized in that** the retaining means secured on the support (4) are at least a locking system (9) of a seat backrest and/or a safety belt reel.

3. The lateral rear structure of a vehicle according to one of Claims 1 to 2, **characterized in that** the lateral crossmember is positioned substantially parallel to the longitudinal axis of the vehicle.

4. The lateral rear structure of a vehicle according to at least one of Claims 1 to 3, **characterized in that** the lateral crossmember (2) is positioned beneath an opening (8) formed in the lateral rear part of the vehicle and intended to receive a quarter light.

5. The lateral rear structure of a vehicle according to at least one of Claims 1 to 4, **characterized in that** the lateral crossmember (2) comprises a weakened zone (11) situated between the front end of the lateral crossmember (2), along the direction of the vehicle, and the support (4), on the lateral part of this crossmember (2) oriented on the side of the interior of the vehicle, in which the mechanical resistance of this weakened zone (11) to a compression force along an axis substantially parallel to the axis of the lateral crossmember (2) is strictly less than the resistance, following the same force, of the remainder of the lateral crossmember (2), such that, under the action of a compression force along an axis substantially parallel to the longitudinal axis of the lateral crossmember, this lateral crossmember (2) deforms at the level of this weakened zone (11) along a direction substantially parallel to the transverse axis of the vehicle and oriented toward the exterior of the vehicle.

6. The lateral rear structure of a vehicle according to Claim 5, **characterized in that** the weakened zone (11) is realized by a hollow shape, oriented toward the exterior of the vehicle, in the surface of the side of the lateral crossmember (2) oriented on the side of the interior of the vehicle.

7. The lateral rear structure of a vehicle according to one of Claims 5 to 6, **characterized in that** the weakened zone (11) is positioned substantially in the middle of the segment of the lateral crossmember (2) defined between the rear pillar (3) of the door opening and the support (4).

8. The lateral rear structure of a vehicle according to at least one of Claims 5 or 7, **characterized in that** the lateral crossmember (2) is realized by two sheet metal profiles overlapping one another at least over the length of the weakened zone (11).

9. A motor vehicle comprising rigid roof arches (6), without a roof crossmember at the rear end of the roof along the direction of the vehicle, **characterized in that** it comprises a rear lateral structure according to one of Claims 1 to 8.

10. A cabriolet vehicle, **characterized in that** it comprises a lateral rear structure according to at least one of Claims 1 to 8, except Claim 4.
